(19) Europäisches Patentamt
European Patent Office
Office européen des brevets

(11) **EP 4 373 150 A1**

(12) **EUROPEAN PATENT APPLICATION**
published in accordance with Art. 153(4) EPC

(43) Date of publication:
**22.05.2024 Bulletin 2024/21**

(21) Application number: **21949584.3**

(22) Date of filing: **12.07.2021**

(51) International Patent Classification (IPC):
***H04W 24/08*** (2009.01)

(52) Cooperative Patent Classification (CPC):
**H04W 24/08; Y02D 30/70**

(86) International application number:
**PCT/CN2021/105850**

(87) International publication number:
**WO 2023/283788 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **LI, Yanhua**
**Beijing 100085 (CN)**
• **HU, Ziquan**
**Beijing 100085 (CN)**

(74) Representative: **Hughes, Andrea Michelle**
**Dehns Germany**
**Theresienstraße 6-8**
**80333 München (DE)**

(54) **METHOD AND APPARATUS FOR DETERMINING RRM MEASUREMENT CONFIGURATION, COMMUNICATION DEVICE, AND STORAGE MEDIUM**

(57) Provided in embodiments of the present disclosure are a method and apparatus for determining an RRM measurement configuration, a communication device, and a storage medium. The method for determining an RRM measurement configuration as executed by a user equipment (UE) may comprise: in response to an extended discontinuous reception (eDRX) cycle of a UE having a paging time window (PTW), determining a relaxed RRM measurement configuration according to a circumstance of RRM measurement relaxation being limited by said PTW.

S110: in response to an extended discontinuous reception (eDRX) cycle of the UE having a paging time window (PTW), determining a relaxed RRM measurement configuration according to a situation where an RRM measurement relaxation is limited to the PTW

FIG. 4

**Description**

**TECHNICAL FIELD**

The disclosure relates to a field of wireless communication technologies, but is not limited to the field of wireless communication technologies, and specifically to a method and an apparatus for determining a radio resource management (RRM) measurement configuration, a communication device, and a storage medium.

**BACKGROUND**

Due to the mobility of user equipment (UE), the UE needs to perform RRM measurement, in order to select, based on a measurement result, a suitable cell in a wireless network to camp on and thus obtain a wireless communication service.
The RRM measurement is performed based on an RRM measurement configuration.
In some cases, considering that a movement rate of the UE becomes slow or a sleep time of the UE becomes long, the RRM measurement may be relaxed. Relaxing an RRM measurement may be done by increasing a measurement cycle or reducing a number of sampling points for a single measurement.

**SUMMARY**

Embodiments of the disclosure provide a method and an apparatus for determining an RRM measurement configuration, a communication device, and a storage medium.
A first aspect of the embodiments of the disclosure provides a method for determining an RRM measurement configuration, which is performed by a UE. The method includes: in response to an extended discontinuous reception (eDRX) cycle of the UE having a paging time window (PTW), determining a relaxed RRM measurement configuration according to a situation where an RRM measurement relaxation is limited to the PTW.
A second aspect of the embodiments of the disclosure provides an apparatus for determining an RRM measurement configuration. The apparatus includes: a first determination module, configured to in response to an eDRX cycle of the UE having a PTW, determine a relaxed RRM measurement configuration according to a situation where an RRM measurement relaxation is limited to the PTW.
A third aspect of the embodiments of the disclosure provides a communication device, including: a processor, transceiver, and a memory storing executable programs that are able to be run by the processor. When the executable programs are executed by the processor, the method for determining an RRM measurement configuration according to the foregoing first aspect is implemented.
A fourth aspect of the embodiments of the disclosure provides a computer-readable storage medium storing executable programs. When the executable programs are executed by the processor, the method for determining an RRM measurement configuration according to the foregoing first aspect is implemented.
According to the technical solutions proposed by the embodiments of the disclosure, when the UE is configured with an eDRX cycle and the RRM measurement needs to be relaxed after the UE entering the eDRX cycle, measurement configuration for performing the relaxed RRM measurement may be determined according a situation of whether the eDRX cycle and the relaxed cycles associated with the RRM measurement are limited to the PTW of the eDRX cycle. The relaxed RRM measurement configuration determined based on the eDRX cycle of UE and the PTW of the eDRX cycle is adapted to the eDRX cycle in which the UE is currently located. As such, on the one hand, relaxation of the RRM measurement may be achieved and power consumption of the RRM measurement may be thus reduced. On the other hand, adapting the measurement configuration for the relaxed RRM measurement to the eDRX cycle and PTW of the UE may reduce unnecessary wake-ups caused by the RRM measurement as much as possible, power consumption caused by the unnecessary wake-ups may be further reduced as much as possible and a standby time of UE may be thus extended.
It should be understood that the above general description and the following detailed description are only exemplary and explanatory, and do not limit the embodiments of the disclosure.

**BRIEF DESCRIPTION OF THE DRAWINGS**

The accompanying drawings, which are incorporated in and constitute a part of this specification, illustrate the embodiments consistent with the disclosure and together with the description serve to explain the principles of the embodiments of the disclosure.

FIG. 1 is a structural diagram illustrating a wireless communication system according to an exemplary embodiment.

FIG. 2 is a timing diagram illustrating an e-DRX function execution according to an exemplary embodiment.

FIG. 3 is interaction diagram illustrating an e-DRX function in an idle state configured by a core network according to an exemplary embodiment.

FIG. 4 is a flowchart illustrating a method for determining an RRM measurement configuration according to an exemplary embodiment.

FIG. 5 is a flowchart illustrating a method for determining an RRM measurement configuration according to an exemplary embodiment.

FIG. 6 is a flowchart illustrating a method for determining an RRM measurement configuration according to an exemplary embodiment.

FIG. 7 is a flowchart illustrating a method for determining an RRM measurement configuration according to an exemplary embodiment.

FIG. 8 is a structural diagram illustrating an apparatus for determining an RRM measurement configuration according to an exemplary embodiment.

FIG. 9 is a structural diagram illustrating UE according to an exemplary embodiment.

FIG. 10 is a structural diagram illustrating a communication device according to an exemplary embodiment.

## DETAILED DESCRIPTION

Exemplary embodiments may be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all the implementations consistent with the embodiments of the disclosure. Rather, they are merely examples of apparatuses and methods consistent with some aspects of the embodiments of the disclosure as detailed in the appended claims.

The terminology used in the embodiments of the disclosure is only for the purpose of describing specific embodiments and is not intended to limit the embodiments of the disclosure. As used in the embodiments of the disclosure and the appended claims, the singular forms "a", "an" and "the" are intended to include the plural forms as well, unless the context clearly dictates otherwise. It may also be understood that the term "and/or" as used herein refers to and includes any and all possible combinations of one or more of the associated listed items.

It should be understood that although the terms first, second, third, etc. may be used to describe various information in the embodiments of the disclosure, the information should not be limited to these terms. These terms are only used to distinguish information of the same type from each other. For example, without departing from the scope of the embodiments of the disclosure, first information may also be called second information, and similarly, second information may also be called first information. Depending on the context, the words "if" as used herein may be interpreted as "when" or "upon" or "in response to determining."

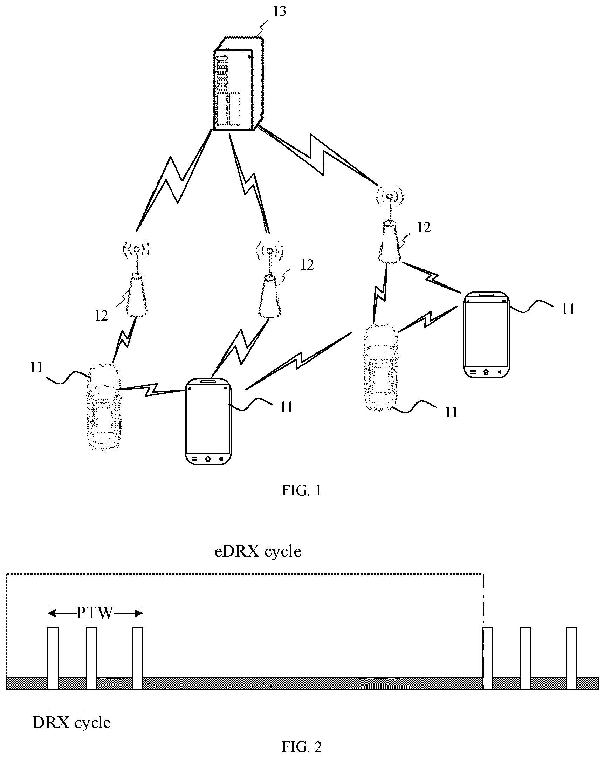

Referring to FIG. 1, it illustrates a structural diagram of a wireless communication system according to an embodiment of the disclosure. As illustrated in FIG. 1, the wireless communication system is a communication system based on cellular mobile communication technologies. The wireless communication system may include several UEs 11 and several access devices 12.

The UE 11 may be a device providing voice and/or data connectivity for a user. The UE 11 may communicate with one or more core networks via a radio access network (RAN). The UE 11 may be an Internet of Things UE, such as, a sensor device, a mobile phone (or a "cellular" phone), or a computer with the Internet of Things UE. The terminal 11 may be a fixed, portable, pocket-sized, handheld, computer-built or vehicle-mounted device, such as, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may be an unmanned aerial vehicle. Alternatively, the UE 11 may be a vehicle-mounted/on-board device, such as, a driving computer with a wireless communication function, or a wireless communication device with an external driving computer. Alternatively, the UE 11 may be a roadside device, such as a street lamp, a signal lamp or other roadside devices with the wireless communication function.

The access device 12 may be a network-side device in the wireless communication system. The wireless communication system may be the fourth generation mobile communication (4G) system, also known as a long term evolution (LTE) system. Alternatively, the wireless communication system may be the fifth generation (5G) system, also known as a new radio (NR) system or a 5G NR system. Alternatively, the wireless communication system may be a next-generation system following the 5G system. An access network in the 5G system may be called a new generation-radio access network (NG-RAN), or a machine-type communication (MTC) system.

The access device 12 may be an evolved access device (i.e., evolved Node B, eNB) employed in the 4G system. Alternatively, the access device 12 may be an access device (i.e., gNB) with a centralized distributed architecture in the 5G system. The access device 12 generally includes a central unit (CU) and at least two distributed units (DUs) when employing the centralized distributed architecture. There are protocol stacks of a packet data convergence protocol (PDCP) layer, a radio link control (RLC) layer and a media access control (MAC) layer provided in the central unit. A protocol stack of a physical layer (PHY) is provided in the distribution unit. The specific implementation of the access device 12 is not limited in embodiments of the disclosure.

A wireless connection may be established between the access device 12 and the UE 11 via a wireless air interface. In different implementations, the wireless air interface is a wireless air interface based on the 4G mobile communication network technology standard. Alternatively, the wireless air interface is a wireless air interface based on the 5G mobile communication network technology standard. For example, the wireless air interface is a new air interface. Alternatively, the wireless air interface may also be a wireless air interface based on a next generation mobile communication network technology standard following the 5G standard.

In some embodiments, an end to end connection between the UEs may be established, for example, scenarios of vehicle to vehicle (V2V) communication, vehicle to Infrastructure (V2I), and vehicle to pedestrian (V2P) in vehicle to everything (V2X) communication.

In some embodiments, the wireless communication system may also include a network management device 13.

The several access devices 12 are respectively connected to the network management device 13. The network management device 13 may be a core network device in the wireless communication system. For example, the network management device 13 may be a mobility management entity (MME) in an evolved packet core network (EPC). Alternatively, the network management device may be other core network device, such as a serving gateway (SGW), a public data network gateway (PGW), a policy and charging rule function (PCRF) or a home subscriber server (HSS). The implementation form of the network management device 13 is not limited in embodiments of the disclosure.

When the UE activates an eDRX function, then the UE will enter an eDRX mode. UE in the eDRX mode has the following characteristics: UE is reachable at any time, but the reachable delay is large and the delay depends on configuration of an eDRX cycle.

In this way, the UE with the eDRX function activated achieves a balance between power consumption of the UE and timeliness of data transmission to the maximum extent.

The eDRX function has one or more of the following eDRX parameters: a starting time domain position of a PTW; a length of a PTW; and an eDRX cycle that may be represented by $T_{eDRX, H}$.

FIG. 2 illustrates a timing diagram after the UE activates the eDRX function.

Referring to FIG. 2, it may be seen that there is one PTW in one eDRX cycle, and there are one or more DRX cycles in the PTW.

A length of the DRX cycle may be much shorter than a length of the eDRX cycle. For example, when the eDRX cycle is greater than 10.24s, the eDRX cycle as illustrated in FIG. 2 may include a PTW composed of one or more DRX cycles.

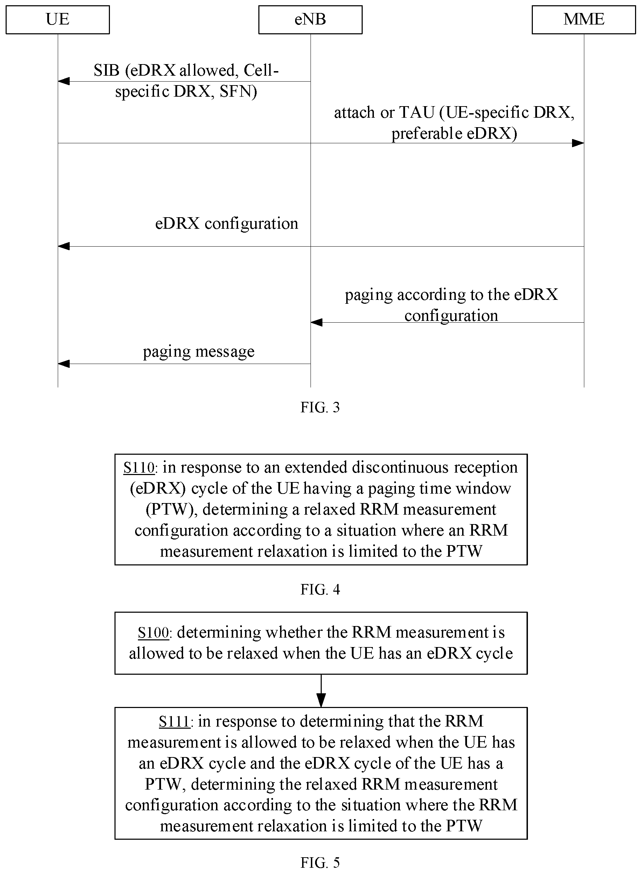

FIG. 3 illustrates eDRX parameters for the eDRX function is interacted between the UE and the core network.

The method for interacting the eDRX parameters between the UE and the core network illustrated in FIG. 3 may include the following steps:

sending by the eNB, an indication of allowed eDRX, a cell-specific DRX indication and a hyper system frame number (SFN) to the UE via system information block (SIB);
sending by the UE, UE-specific DRX parameters and/or preferred eDRX parameters in an attach request or a tracking area update (TAU) request;
sending by the MME, an eDRX configuration to the UE after receiving the above-mentioned attach request or TAU request, in which the eDRX configuration carries one or more eDRX parameters aforementioned;
paging by the MME according to the eDRX configuration; and
forwarding by the eNB, a core network (CN) paging message to the UE after receiving the CN paging message sent by the MME.

The eDRX parameters sent by the core network are transparently transmitted to the UE through a base station (for example, an eNB or a gNB). For example, the MME function of the core network sends the eDRX parameters for the eDRX function to the UE via the eNB.

The radio resource control (RRC) idle state, referred to as idle state, is a low-power state of UE known to the core network.

The RRC inactive state, referred to as inactive state, is a low-power consumption state of the UE that is transparent to the core network. The inactive state is visible to the access network.

When the UE enters the inactive state, the UE needs to receive a paging message sent by the CN (that is, the CN paging message), and also needs to receive a paging message sent by the radio access network (RAN), that is, the RAN paging message.

As illustrated in FIG. 4, an embodiment of the disclosure provides a method for determining an RRM measurement configuration, which is performed by a UE. The method includes the following step at S110.

At S 110, in response to an eDRX cycle of the UE having a PTW, a relaxed RRM measurement configuration is determined according to a situation where an RRM measurement relaxation is limited to the PTW.

The UE has different states. For example, the UE has a connected state (also called RRC connected state) or a non-connected state. The non-connected state includes but is not limited to: an idle state (also called RRC idle state) and/or an inactive state (also called RRC inactive state).

In some cases, the UE has an eDRX cycle in an idle state (i.e., eDRX_IDLE cycle). In other cases, the UE has an eDRX cycle in an inactive state (i.e., eDRX_INACTIVE cycle). In some cases, the UE has both the eDRX_IDLE cycle and the eDRX_INACTIVE cycle at the same time.

The eDRX_IDLE cycle may be an eDRX cycle applied when the UE monitors the CN paging message. The eDRX_INACTIVE cycle may be an eDRX cycle applied when the UE is in the inactive state for monitoring the RAN paging message.

In some embodiments, the eDRX cycle of the UE involved in S 110 is a cycle used to determine RRM measurement configuration, and the cycle may be determined according to a current state of the UE and the eDRX cycle configuration. For example, the eDRX cycle used by the UE to determine RRM measurement configuration may be as follows:

when the UE is in the idle state, and the UE is not configured with an eDRX_IDLE cycle, it is determined that the UE does not have an eDRX cycle for determining RRM measurement, and RRM measurement configuration is determined according to a DRX cycle of the UE, in which the RRM measurement configuration includes: an RRM measurement configuration before relaxation and/or the relaxed RRM measurement configuration;

when the UE is in the idle state, and the UE is configured with an eDRX_IDLE cycle, it is determined that the UE has an eDRX cycle for determining RRM measurement, and the eDRX cycle used by the UE to determine RRM measurement may be equal to the eDRX_IDLE cycle;

when the UE is in the inactive state, and the UE is not configured with an eDRX_IDLE cycle and an eDRX_INACTIVE cycle, it is determined that the UE does not have an eDRX cycle for determining RRM measurement, RRM measurement configuration is determined according to a DRX cycle of the UE, in which the RRM measurement configuration includes: the RRM measurement configuration before relaxation and/or the relaxed RRM measurement configuration;

when the UE is in the inactive state, and the UE is configured with an eDRX_IDLE cycle but is not configured with an eDRX_INACTIVE cycle, it is determined that the UE does not have an eDRX cycle for determining RRM measurement, RRM measurement configuration is determined according to a DRX cycle of the UE, in which the RRM measurement configuration includes: the RRM measurement configuration before relaxation and/or the relaxed RRM measurement configuration;

when the UE is in the inactive state, and the UE is configured with an eDRX_IDLE cycle but is not configured with an eDRX_INACTIVE cycle, it is determined that the UE has an eDRX cycle for determining RRM measurement, and the eDRX cycle used by the UE to determine RRM measurement is equal to the eDRX_IDLE cycle;

when the UE is in the inactive state, and the UE is configured with an eDRX_IDLE cycle and an eDRX_INACTIVE cycle, it is determined that the UE has an eDRX cycle for determining RRM measurement, and the eDRX cycle used by the UE to determine RRM measurement is equal to the eDRX_INACTIVE cycle;

when the UE is in the inactive state, and the UE is configured with an eDRX_IDLE cycle and an eDRX_INACTIVE cycle, it is determined that the UE has an eDRX cycle for determining RRM measurement, and the eDRX cycle used by the UE to determine RRM measurement is equal to the smaller of the eDRX_IDLE cycle and the eDRX_INACTIVE cycle.

When the eDRX cycle is greater than a preset cycle, the eDRX cycle has a PTW. When the eDRX cycle is not greater than the preset cycle, the eDRX cycle may not have a PTW.

For example, an eDRX cycle greater than 10.24s may have a PTW, while an eDRX cycle less than or equal to 10.24s may not have a PTW. One or more DRX cycles are set within the PTW.

In an embodiment, the eDRX cycle of the UE having a PTW means that the eDRX cycle used by the UE to determine RRM measurement has a PTW That is, when the eDRX cycle used by the UE to determine RRM measurement is greater than a preset cycle, it is determined that the eDRX cycle used by the UE to determine RRM measurement has a PTW.

When the eDRX cycle used by the UE to determine RRM measurement is greater than the preset cycle (i.e., it is determined that the eDRX cycle has a PTW), the PTW length may be determined in at least one of the following ways:

when the UE is in the idle state, the eDRX cycle used by the UE to determine RRM measurement is the eDRX_IDLE cycle, and the eDRX_IDLE cycle has a PTW, then PTW of the eDRX cycle used by the UE to determine RRM measurement configuration is equal to PTW of the eDRX_IDLE cycle;

when the UE is in the inactive state, the eDRX cycle used to determine RRM measurement is the eDRX_INACTIVE cycle, and the eDRX_INACTIVE cycle has a PTW, then PTW of the eDRX cycle used by the UE to determine RRM measurement configuration is equal to PTW of the eDRX_INACTIVE cycle;

when the UE is in the inactive state, the eDRX cycle used by the UE to determine RRM measurement is the eDRX_IDLE cycle, and the eDRX_IDLE cycle of the UE has a PTW, then the eDRX cycle used by the UE to determine RRM measurement configuration has a PTW, and the PTW included in the eDRX cycle used by the UE to determine RRM measurement configuration is equal to the PTW of the eDRX_IDLE cycle, in which the UE may or may not have an eDRX _INACTIVE cycle;

when the UE is in the inactive state, the eDRX cycle used by the UE to determine RRM measurement is the eDRX_INACTIVE cycle, and the eDRX_IDLE cycle of the UE has a PTW but the eDRX_INACTIVE cycle does not have a PTW, then the eDRX cycle used by the UE to determine RRM measurement configuration does not have the PTW; or

when the UE is in the inactive state, and the UE has an eDRX_IDLE cycle and an eDRX_INACTIVE cycle, then the eDRX cycle used by the UE to determine RRM measurement may be the larger/smaller of the eDRX_IDLE cycle and the eDRX_INACTIVE cycle, further to determine whether the eDRX cycle used for RRM policy has a PTW When the eDRX cycle used for RRM policy has the PTW, the PTW may be one of the PTW of the eDRX_IDLE cycle and the PTW of the eDRX_INACTIVE cycle.

For example, when both the eDRX_IDLE cycle and the eDRX_INACTIVE cycle of the UE have a PTW, then the PTW used to determine RRM measurement at this time may be the larger/smaller of the eDRX_IDLE cycle and the eDRX_INACTIVE cycle. For another example, the eDRX cycle used by the UE to determine RRM measurement may be the smaller of the eDRX_IDLE cycle and the eDRX_INACTIVE cycle, and the PTW used to determine RRM measurement may be PTW of the larger of the eDRX_IDLE cycle or the eDRX_INACTIVE cycle. When only one of the eDRX_IDLE cycle and the eDRX_INACTIVE cycle has a PTW, the PTW may be the PTW used to determine RRM measurement.

When specifically determining RRM measurement before relaxation and/or relaxed RRM measurement, it needs to be determined according to a DRX cycle. The DRX cycle used to determine the RRM measurement may be determined in one of the following ways:

when the eDRX cycle used to determine RRM measurement is the eDRX_IDLE cycle, and the eDRX_IDLE cycle has a PTW, then the DRX cycle used by the UE to determine RRM measurement configuration may be a DRX_IDLE cycle within the PTW of the eDRX_IDLE cycle;

when the eDRX cycle used to determine RRM measurement is an eDRX_INACTIVE cycle, and the eDRX_INACTIVE cycle has a PTW, then the DRX cycle used by the UE to determine the RRM measurement configuration may be a RAN paging cycle within the PTW of the eDRX_INACTIVE cycle;

when the eDRX cycle used to determine RRM measurement is an eDRX_INACTIVE cycle, and the eDRX_INACTIVE cycle has a PTW, then the DRX cycle used by the UE to determine RRM measurement configuration may be the smaller of a RAN paging cycle within the PTW of the eDRX_INACTIVE cycle and the DRX_IDLE cycle;

when the eDRX cycle used to determine RRM measurement is an eDRX_INACTIVE cycle, and the eDRX_INACTIVE cycle has a PTW, then the DRX cycle used by the UE to determine RRM measurement configuration may be the smallest among a RAN paging cycle within the PTW of the eDRX_INACTIVE cycle, the DRX_IDLE cycle, and a default paging cycle;

when the eDRX cycle used to determine RRM measurement is an eDRX_INACTIVE cycle, and the eDRX_INACTIVE cycle has a PTW, then the DRX cycle used by the UE to determine RRM measurement configuration may be the smaller of a RAN paging cycle within the PTW of the eDRX_INACTIVE cycle and a default paging cycle.

When the UE is currently in the idle state and periodically sleeps and wakes up according to the eDRX_IDLE cycle, then the relaxed RRM measurement configuration may be determined according to the eDRX_IDLE cycle of the UE and the PTW within the eDRX_IDLE cycle.

The eDRX cycle, PTW and DRX cycle may be obtained below based on the state of the UE and different eDRX configurations.

In an embodiment, a length of the DRX cycle used to determine the RRM measurement configuration before relaxation and the relaxed RRM measurement configuration is equal to: min {DRX_IDLE cycle, default paging cycle}.

When the UE is currently in the inactive state and only the eDRX_IDLE cycle is configured, then RRM measurement configuration before relaxation and RRM measurement configuration are determined for example according to the eDRX_IDLE cycle of the UE and the PTW (i.e., the idle PTW) within the eDRX_IDLE cycle.

In an embodiment, the length of the DRX cycle used to determine the RRM measurement configuration before relaxation and the relaxed RRM measurement configuration is equal to: min {DRX_IDLE cycle, default paging cycle}, or min {DRX_IDLE cycle, default paging cycle, RAN paging cycle }.

When the UE is currently in the inactive state, and both the eDRX_IDLE cycle and the eDRX_INACTIVE cycle are configured, periodic sleep and wake-up are performed for example according to the eDRX_INACTIVE cycle. At this time, the relaxed RRM measurement configuration may be determined according to the eDRX_INACTIVE cycle of the UE and the PTW within the eDRX_INACTIVE cycle (i.e., the inactive PTW length).

In an embodiment, the length of the DRX cycle used to determine the RRM measurement configuration before relaxation and the relaxed RRM measurement configuration is equal to: min {DRX_IDLE cycle, default paging cycle, RAN paging cycle}, or min {default paging cycle, RAN paging cycle}, or RAN paging cycle.

In an embodiment, periodic sleep and wake-up are performed according to the eDRX_IDLE cycle. At this time, the RRM measurement configuration before relaxation and the relaxed RRM measurement configuration may be determined according to the eDRX_IDLE cycle of the UE and the PTW within the eDRX_IDLE cycle (i.e., the idle PTW length).

In an embodiment, the length of the DRX cycle used to determine the RRM measurement configuration is equal to min {DRX_IDLE cycle, default paging cycle} or min {DRX_IDLE cycle, default paging cycle, RAN paging cycle}.

In an embodiment, periodic sleep and wake-up are performed according to min {eDRX_IDLE cycle, eDRX_INACTIVE cycle}, and the RRM measurement configuration before relaxation and the relaxed RRM measurement configuration may be determined according to min {eDRXIDLE cycle, eDRX_INACTIVE cycle} and max {idle PTW length, inactive PTW length} of the UE or min {idle PTW length, inactive PTW length}.

In an embodiment, the length of DRX cycle used to determine RRM measurement configuration is equal to: min {DRX_IDLE cycle, default paging duration, RAN paging cycle}.

In an embodiment, the RRM measurement configuration includes: RRM measurement configuration for a serving cell and/or RRM measurement configuration for a neighbor cell. Therefore, the relaxed RRM measurement configuration may also include: a relaxed RRM measurement configuration for the serving cell and/or a relaxed RRM measurement configuration for the neighbor cell.

When the state of the UE fulfils a relaxation measurement condition, the RRM measurement may be relaxed. After it is determined to relax the RRM measurement, the RRM measurement may be performed according to the relaxed RRM measurement configuration.

In an embodiment, the state of the UE fulfilling the relaxation measurement condition includes but is not limited to at least one of: the UE being currently located in a central area of a serving cell; a change of a reference signal value of a serving cell currently measured by the UE being less than the change threshold; or a current movement rate of the UE being less than a rate threshold.

For example, the state of the UE fulfilling the relaxation measurement condition includes but is not limited to at least one of: the UE being in a non-connected state and currently located in a central area of a serving cell; or the UE being in a non-connected state and a current movement rate of the UE being less than a rate threshold.

A geographical area corresponding to a cell may include a central area and an edge area. A distance between the central area and the base station is smaller than a distance between the edge area and the base station. The edge area can also be called a cell edge. Generally, the edge area of the cell is an area adjacent to other cell, while the center area of the cell is far away from the cell edge and is relatively far away from a neighbor cell.

Since the UE is located in the central area of the serving cell, the probability that the UE needs to perform cell reselection based on RRM measurement is relatively small and the RRM measurement may be appropriately relaxed.

Since the movement rate of the UE is less than the rate threshold, meaning that the UE is in a stationary state or a low-speed moving state, the probability that the UE moves out of the current cell is very small and the RRM measurement can also be appropriately relaxed.

The movement rate of the UE may be determined according to a rate detected by its own speed sensor, or may be determined according to the change in the reference signal value of the serving cell currently detected by the UE.

When the change in the signal measurement value of the serving cell currently detected by the UE is very small, meaning that the UE may be in a stationary or low-speed moving state, the probability that the UE moves out of the current cell is very low and the RRM measurement can also be appropriately relaxed.

For example, the RRM measurement configuration includes at least one of: RRM measurement configuration for a serving cell, in which the RRM measurement configuration for the serving cell includes at least a measurement cycle, and the measurement cycle is configured for measurement of the serving cell; or RRM measurement configuration for a neighbor cell, in which the RRM measurement configuration for the neighbor cell includes at least one of a detection cycle, a measurement cycle or an evaluation cycle.

The detection cycle is configured to identify and evaluate the neighbor cell.

The measurement cycle is configured to measure the neighbor cell.

The evaluation cycle is configured to evaluate the neighbor cell according to a measurement result measured in the measurement cycle.

The serving cell may be a cell where the UE currently camps on, and the UE may directly perform measurement on the serving cell.

The UE needs to detect and identify the neighbor cell, to measure the identified neighbor cell based on the measurement cycle, and to evaluate the neighbor cell after measuring the neighbor cell.

Therefore, a measurement configuration for RRM measurement of the neighbor cell includes at least one of a detection cycle, a measurement cycle or an evaluation cycle.

The neighbor cell includes but is not limited to an intra-frequency neighbor cell, an inter-frequency neighbor cell and/or an inter-RAT (radio access technology) neighbor cell.

Within the measurement cycle, the UE may measure a reference signal of the serving cell (e.g., synchronization signal and PBCH block, SSB) and/or a reference signal of the neighbor cell to obtain a measurement result. PBCH is the abbreviation of physical broadcast channel. The reference signal includes but is not limited to: SSB and channel state information reference signal (CSI-RS).

This measurement may include, but is not limited to a measurement signal value; and a comparison result between the measurement signal value and a corresponding threshold value.

The measurement signal value includes but is not limited to reference signal received power (RSRP) or reference signal received quality (RSRQ). When performing relaxation on the RRM measurement, measurement may be relaxed for the serving cell, and/or, at least one of detection, measurement, or evaluation may be relaxed for the neighbor cell.

Relaxing RRM measurement may enlarge various cycles in RRM measurement and/or reduce a number of measurement points in a single measurement, etc. In the embodiments of the disclosure, in order to simplify the processing, the relaxation measurement may be implemented by one of the ways of enlarging various cycles in RRM measurement.

For example, the S110 may include at least one of: enlarging with a relaxation coefficient, any cycle included in the RRM measurement configuration before relaxation according to the situation where an RRM measurement relaxation is limited to the PTW, to obtain a relaxed cycle, in which the relaxation coefficient is any positive integer greater than 1.

The situation where the RRM measurement relaxation is limited to the PTW may include at least one of: the RRM measurement relaxation is limited to the PTW, and/or the RRM measurement relaxation is not limited to the PTW

When the RRM measurement relaxation is not limited to the PTW, any cycle included in the relaxed RRM measurement configuration may be scaled based on the relaxation coefficient.

When RRM measurement relaxation is limited to the PTW, the relaxation coefficient needs to be adjusted so that the cycle included in the relaxed RRM measurement configuration does not exceed the PTW length.

In the embodiment of the disclosure, the relaxation coefficient may be any positive integer greater than 1.

In an embodiment, the relaxed cycle may include at least one of:

for a serving cell and a relaxed measurement cycle, the relaxed measurement cycle is longer than a measurement cycle before relaxation. As such, a measurement interval between two adjacent measurements for the serving cell increases;

for a neighbor cell and a relaxed detection cycle, the relaxed detection cycle is larger than a detection cycle before relaxation. As such, a time interval between two adjacent detections increases, thus reducing a detection frequency;

for a neighbor cell and a relaxed measurement cycle, the relaxed measurement cycle is larger than a measurement cycle before relaxation. As such, a time interval between two adjacent measurements increases, thus reducing a measurement frequency; or

for a neighbor cell and a relaxed evaluation cycle, the relaxed evaluation cycle is larger than an evaluation cycle before relaxation. As such, a time interval between two adjacent evaluations increases, thus reducing an evaluation frequency.

For example, the situation where the RRM measurement relaxation is limited to the PTW includes that the RRM measurement relaxation being limited to the PTW and/or the RRM measurement relaxation being not limited to the PTW. In the two cases, various relaxed cycles associated with the RRM measurement may be determined by at least one of:

in response to the RRM measurement relaxation not being limited to the PTW, the enlarged cycle associated with the RRM measurement may be greater than the PTW of the eDRX cycle, that is, in response to the RRM measurement relaxation being not limited to the PTW, a duration corresponding to the enlarged cycle associated with the RRM measurement may be distributed within one or more PTWs; or

in response to the RRM measurement relaxation being limited to the PTW, the enlarged cycle associated with the RRM measurement may not be greater than the PTW of the eDRX cycle, that is, in response to the RRM measurement relaxation being limited to the PTW, a duration corresponding to the enlarged cycle associated with the RRM measurement may only be distributed within one PTW.

In an embodiment, determining the relaxed RRM measurement configuration according to the situation where the RRM measurement relaxation is limited to the PTW includes at least one of:

in response to the RRM measurement relaxation not being limited to the PTW, determining a relaxed measurement cycle for a serving cell according to a relaxation coefficient;
in response to the RRM measurement relaxation not being limited to the PTW, determining at least one of a relaxed detection cycle, a relaxed measurement cycle or a relaxed evaluation cycle for a neighbor cell according to a relaxation coefficient;
in response to the RRM measurement relaxation being limited to the PTW, determining a relaxed measurement cycle for a serving cell according to a relaxation coefficient and a length of the PTW;
in response to the RRM measurement relaxation being limited to the PTW, determining at least a relaxed measurement cycle and/or a relaxed evaluation cycle for a neighbor cell according to a relaxation coefficient and a length of the PTW; or
in response to the RRM measurement relaxation being limited to the PTW, determining a relaxed detection cycle for a neighbor cell according to a relaxation coefficient.

It needs to be noted that in the embodiments of the disclosure, no matter whether the RRM measurement relaxation is limited to the PTW of the UE, the detection cycle for the neighbor cell may not pay attention to the PTW but is directly determined according to the relaxation coefficient. In this way, regardless of whether the RRM measurement relaxation is limited to the PTW of the UE, the detection cycle of the neighbor cell is related to the relaxation coefficient but is not related to the PTW and at this time, the detection cycle of the neighbor cell may be distributed within one or more PTWs.

For the serving cell, when the RRM measurement relaxation is not limited to the PTW, the relaxed measurement cycle may be determined according to the relaxation coefficient. When the RRM measurement relaxation is limited to the PTW, the measurement cycle of the serving cell needs to be determined according to the relaxation coefficient and the PTW.

For the neighbor cell, when the RRM measurement relaxation is not limited to the PTW, the relaxed measurement cycle and/or the relaxed evaluation cycle need to be determined according to the relaxation coefficient. When the RRM measurement relaxation is limited to the PTW, the measurement cycle and/or the evaluation cycle for the neighbor cell need to be determined according to the relaxation coefficient and the PTW.

For the situations where the RRM measurement relaxation is not limited to the PTW and where the RRM measurement relaxation is limited to the PTW, the following examples describe each cycle of the RRM measurement configuration before and after relaxation. The specific implementation is not limited to the following examples.

For the detection cycle of the neighbor cell, regardless of whether the RRM measurement relaxation is limited to the PTW, the relaxed detection cycle may be determined directly according to the current relaxation coefficient. Therefore, in response to determining the relaxed detection cycle for the neighbor cell according to the relaxation coefficient, the detection cycle before relaxation is $\lceil 23/\lceil PTW/DRX\_cycle\_length\rceil\rceil \times N1 * eDRX\_cycle\_length$; in response to determining the relaxed detection cycle for the neighbor cell according to the relaxation coefficient, the relaxed detection cycle is:

$$eDRX\_cycle\_length \times \lceil 23 \times K1/\lceil PTW/DRX\_cycle\_length\rceil\rceil \times N1,$$

or

$$K1 \times eDRX\_cycle\_length \times \lceil 23/\lceil PTW/DRX\_cycle\_length\rceil\rceil \times N1;$$

where the *eDRX_cycle_length* is a length of an eDRX cycle;
the *PTW* is a length of a PTW within an eDRX cycle;
the *DRX_cycle_length* is a length of a DRX cycle within a PTW;
the N1 is a relaxation coefficient corresponding to a power level and a frequency band supported by the UE; and
the K1 is a relaxation coefficient of the detection cycle for the neighbor cell.

Regarding the detection cycle for the neighbor cell, regardless of whether the RRM measurement relaxation is limited to the PTW, the relaxed detection cycle is determined according to the relaxation coefficient. Therefore, the detection cycle before relaxation here may be $\lceil 23/\lceil PTW/DRX\_cycle\_length\rceil\rceil \times N1 * eDRX\_cycle\_length$.

In the embodiments of the disclosure, ⌈ ⌉ in the equations indicates rounding up to an integer.

In some embodiments, in response to determining the relaxed measurement cycle for the neighbor cell according to the relaxation coefficient, the measurement cycle before relaxation is (1×N1) * *DRX cycle _length;*

in response to determining the relaxed measurement cycle for the neighbor cell according to the relaxation coefficient, the relaxed measurement cycle is:

$$eDRX\_cycle\_length \times [(1 \times N1) \times K2/[PTW/DRX\_cycle\_length]],$$

or

where the *eDRX_cycle_length* is a length of an eDRX cycle;
the *PTW* is a length of the PTW within an eDRX cycle;
the *DRX_cycle_length* is a length of a DRX cycle within a PTW;
the N1 is a relaxation coefficient corresponding to a power level and a frequency band supported by the UE; and
the K2 is a relaxation coefficient of the measurement cycle for the neighbor cell.

In some embodiments, in response to determining the relaxed evaluation cycle for the neighbor cell according to the relaxation coefficient, the evaluation cycle before relaxation is: (2×N1) * *DRX_cycle_length;*

in response to determining the relaxed evaluation cycle for the neighbor cell according to the relaxation coefficient, the relaxed evaluation cycle is:

$$eDRX\_cycle\_length \times [(2 \times N1) \times K3/[PTW/DRX\_cycle\_length]],$$

or

where the *eDRX_cycle_length* is a length of an eDRX cycle;
the PTW is a length of a PTW within an eDRX cycle;
the *DRX_cycle_length* is a length of a DRX cycle within a PTW;
the N1 is a relaxation coefficient corresponding to a power level and a frequency band supported by the UE; and
the K3 is a relaxation coefficient of the evaluation cycle for the neighbor cell.

In some embodiments, when the RRM measurement relaxation is limited to the PTW, in response to determining the relaxed measurement cycle for the neighbor cell according to the relaxation coefficient and the length of the PTW, the measurement cycle before relaxation is: (1×N1) * *DRX cycle _length;*

in response to determining the relaxed measurement cycle for the neighbor cell according to the relaxation coefficient and the length of the PTW, the relaxed measurement cycle is K2 * (1×N1) * *DRX_cycle_length,* and K2 * (1×N1) $\leq N_{PTW}$;
the *eDRX_cycle_length* is a length of an eDRX cycle;
the PTW is a length of a PTW within an eDRX cycle;
the *DRX_cycle_length* is a length of a DRX cycle within a PTW; and
the $N_{PTW}$ is a number of DRX cycles included in one PTW, and the K2 is a relaxation coefficient of the measurement cycle for the neighbor cell.

In some embodiments, that is, when relaxation is limited to PTW, in response to determining the evaluation cycle after relaxation for the neighbor cell according to the relaxation coefficient and the duration of the PTW, the evaluation cycle before relaxation is: (2×N1) * *DRX_cycle_length;*

in response to determining the relaxed evaluation cycle for the neighbor cell according to the relaxation coefficient and the length of the PTW, the relaxed evaluation cycle is K3*(2×N1) * *DRX_cycle_length,* and K3*(2×N1) $\leq N_{PTW}$;
where the *eDRX_cycle_length* is a length of an eDRX cycle;
the *PTW* is a length of a PTW within an eDRX cycle;
the *DRX_cycle_length* is a length of a DRX cycle within a PTW; and
the $N_{PTW}$ is a number of DRX cycles included in one PTW, and the K3 is a relaxation coefficient of the evaluation cycle for the neighbor cell.

In some embodiments, when the RRM measurement relaxation is not limited to the PTW, in response to determining the relaxed measurement cycle for the serving cell according to the relaxation coefficient, the measurement cycle before relaxation is $(2 \times N1)$ * *DRX_cycle_length*;
in response to determining the relaxed measurement cycle for the serving cell according to the relaxation coefficient, the relaxed measurement cycle is:

$$eDRX\_cycle\_length \times \lceil (N1*2) \times K4/\lceil PTW/DRX\_cycle\_length \rceil \rceil,$$

or

$$K4 \times eDRX\_cycle\_length \times \lceil (N1*2)/\lceil PTW/DRX\_cycle\_length \rceil \rceil;$$

where the *eDRX_cycle_length* is a length of an eDRX cycle;
the *PTW* is a length of a PTW within an eDRX cycle;
the *DRX_cycle_length* is a length of a DRX cycle within a PTW; and
the N1 is a relaxation coefficient corresponding to a power level and a frequency band supported by the UE; and
the K4 is a relaxation coefficient of the measurement cycle for the serving cell.

In some embodiments, when the RRM measurement relaxation is limited to the PTW, in response to determining the relaxed measurement cycle for the serving cell according to the relaxation coefficient and the length of the PTW, the measurement cycle before relaxation is $(2 \times N1)$ * *DRX cycle _length;*
the relaxed measurement cycle for the serving cell determined according to the relaxation coefficient is K4 $\times$ $(2 \times N1)$ * *DRX_cycle_length,* and $K4*(2 \times N1) \leq N_{PTW}$:

where the *eDRX_cycle_length* is a length of an eDRX cycle;
the *PTW* is a length of a PTW within an eDRX cycle;
the *DRX_cycle_length* is a length of a DRX cycle within a PTW;
the N1 is a relaxation coefficient corresponding to a power level and a frequency band supported by the UE;
the K4 is a relaxation coefficient of the measurement cycle for the serving cell; and
the $N_{PTW}$ is a number of DRX cycles included in one PTW

In the above embodiment, when the relaxed detection cycle, the relaxed evaluation cycle and/or the relaxed measurement cycle are determined according to the relaxation coefficient and the PTW, it is found that the cycle determined according to only the relaxation coefficient exceeds the length of the PTW, then the relaxation coefficient is reduced or re-selected, so that at least the lengths of the relaxed detection cycle, relaxed evaluation cycle and/or relaxed measurement cycle determined according to the redetermined relaxation coefficient do not exceed the PTW.
For example, the S 110 may include at least one of:

in response to the RRM measurement relaxation not being limited to the PTW, determining a relaxed measurement cycle for a serving cell according to a relaxation coefficient, in which a number of DRX cycles included in the relaxed measurement cycle for the serving cell is allowed to be greater than a number of DRX cycles included in one PTW;
in response to the RRM measurement relaxation not being limited to the PTW, determining at least one of a relaxed detection cycle, a relaxed measurement cycle or a relaxed evaluation cycle for a neighbor cell according to a relaxation coefficient, in which a number of DRX cycles included in the relaxed detection cycle, the relaxed measurement cycle and the relaxed evaluation cycle is allowed to be greater than a number of DRX cycles included in one PTW;
in response to the RRM measurement relaxation being limited to the PTW, determining a relaxed measurement cycle for a serving cell according to a relaxation coefficient and a length of the PTW, in which a number of DRX cycles included in the relaxed measurement cycle for the serving cell is not greater than a number of DRX cycles included in one PTW;
in response to the RRM measurement relaxation being limited to the PTW, determining at least a relaxed measurement cycle and/or a relaxed evaluation cycle for a neighbor cell according to a relaxation coefficient and a length of the PTW, in which a number of DRX cycles included in the relaxed measurement cycle and the relaxed evaluation cycle is not greater than a number of DRX cycles included in one PTW; or
in response to the RRM measurement relaxation being limited to the PTW, determining a relaxed detection cycle for a neighbor cell according to a relaxation coefficient.

In some embodiments, for the RRM measurement relaxation of the neighbor cell, when the relaxed RRM measurement configuration is determined, only one of the detection cycle, the measurement cycle and the evaluation cycle may be relaxed. Therefore, in response to the RRM measurement relaxation being not limited to the PTW, determining at least one of the relaxed detection cycle, the relaxed measurement cycle or the relaxed evaluation cycle for the neighbor cell according to the relaxation coefficient includes at least one of:

in response to the RRM measurement relaxation not being limited to the PTW, determining the relaxed detection cycle for the neighbor cell according to a relaxation coefficient of a detection cycle for the neighbor cell;
in response to the RRM measurement relaxation not being limited to the PTW, determining the relaxed measurement cycle for the neighbor cell according to a relaxation coefficient of a measurement cycle for the neighbor cell; or
in response to the RRM measurement relaxation not being limited to the PTW, determining the relaxed evaluation cycle for the neighbor cell according to a relaxation coefficient of an evaluation cycle for the neighbor cell;
in which for the neighbor cell, any two among the relaxation coefficient of the detection cycle, the relaxation coefficient of the measurement cycle, and the relaxation coefficient of the evaluation cycle are independent of each other.

Being independent of each other here means that, the relaxation coefficient of the detection cycle, the relaxation coefficient of the measurement cycle and the relaxation coefficient of the evaluation cycle may be set independently for the neighbor cell. Therefore, the relaxation coefficient of the detection cycle, the relaxation coefficient of the measurement cycle and the relaxation coefficient of the evaluation cycle may be identical or not identical.

In some embodiments, the specific relaxation coefficient may be determined according to an eDRX cycle corresponding to a current state of the UE and a DRX cycle included in a PTW of the eDRX cycle.

For example, the relaxed RRM measurement configuration for the serving cell may be determined with reference to Table 1 or Table 2.

Table 1

| eDRX cycle length [s] | DRX cycle length [s] | PTW length [s] ( number of 1.28s periods) | Scaling Factor (N1) | | $N_{serv}$ [number of DRX cycles] |
|---|---|---|---|---|---|
| | | | FR1 | FR2 | |
| $2.56 \leq$ eDRX_ IDLE cycle length $\leq 2621.44$ | 0.32 | $\geq 1.28$ (1) | 1 | 8 | $eDRX\_cycle\_length \times [(N1*2) \times K4 / \lceil PTW/DRX\_cycle\_length \rceil]$ or $K4 \times eDRX\_cycle\_length \times [(N1*2) / \lceil PTW/DRX\_cycle\_length \rceil]$ |
| | 0.64 | $\geq 1.28$ (1) | | 5 | |
| | 1.28 | $\geq 2.56$ (2) | | 4 | |
| | 2.56 | $\geq 5.12$ (4) | | 3 | |
| Note 1: | The Scaling Factor N1 for UE supporting power class 2&3&4 is equal to each value corresponding to FR1 and FR2. For UE supporting power class 1, N1 = 8 for all DRX cycle length. | | | | |

It needs to be noted that any element in Table 1 may be used alone or in combination with other elements.

K4 is a relaxation coefficient for the serving cell.

Table 2

| eDRX cycle length [s] | DRX cycle length [s] | PTW length [s] ( number of 1.28s periods) | Scaling Factor (N1) | | $N_{serv}$ [number of DRX cycles] |
|---|---|---|---|---|---|
| | | | FR1 | FR2 | |
| $2.56 \leq$ eDRX_IDLE cycle length $\leq 2621.44$ | 0.32 | $\geq 1.28$ (1) | 1 | 8 | N1*2*M9 |
| | 0.64 | $\geq 1.28$ (1) | | 5 | N1*2*M10 |
| | 1.28 | $\geq 2.56$ (2) | | 4 | N1*2*M11 |
| | 2.56 | $\geq 5.12$ (4) | | 3 | N1*2*M12 |
| Note 1: | The Scaling Factor N1 for UE supporting power class 2&3&4 is equal to each value corresponding to FR1 and FR2. For UE supporting power class 1, N1 = 8 for all DRX cycle length. | | | | |

It needs to be noted that any element in Table 2 may be used alone or in combination with other elements.

M9 to M12 in Table 2 are relaxation coefficients of the measurement cycle for the serving cell, and they are all less than $\lceil PTW/DRX\_cycle\_length \rceil$.

Comparing Table 1 with Table 2, it may be seen that in Table 1, a unified relaxation coefficient K4 may be used regardless of the eDRX cycle length and the DRX cycle length of the current UE. In Table 1, when the eDRX cycle length and/or the DRX cycle length of the UE are different, the adopted relaxation coefficients may be different.

Table 1 and Table 2 are only examples of the relaxed RRM measurement configuration for the serving cell. The specific implementation is not limited here.

For another example, the relaxed RRC measurement configuration for the neighbor cell may be determined according to Table 3.

Table 3

| eDRX cycle length [s] | DRX cycle length [s] | PTW length [s] (number of 1.28s periods) | Scaling Factor (N1) | | $T_{detect}$ [s] [number of DRX cycles] | $T_{measure}$ [s] [number of DRX cycles] | $T_{evaluate}$ [s] [number of DRX cycles] |
|---|---|---|---|---|---|---|---|
| | | | **FR1** | **FR2** | | | |
| 2.56 ≤ eDRX_ IDLE cycle length ≤ 2621.44 | 0.32 | ≥1.28 (1) | 1 | 8 | $eDRX\_cycle\_length \times \left\lceil \dfrac{23}{\lceil PTW/DRX\_cycle\_length \rceil} \right\rceil \times N1$ （23×N1） | 0.32×M1x N1 (M1 x N1) | 0.64×M5x N1 (M5 x N1) |
| | 0.64 | ≥1.28 (1) | | 5 | | 0.64×M2x N1 (M2 x N1) | 1.28×M6x N1 (M6 x N1) |
| | 1.28 | ≥2.56 (2) | | 4 | | 1.28×M3x N1 (M3 x N1) | 2.56×M7x N1 (M7 x N1) |
| | 2.56 | ≥5.12 (4) | | 3 | | 2.56×M4x N1 (M4 x N1) | 5.12×M8x N1 (M8 x N1) |
| Note 1: The Scaling Factor N1 for UE supporting power class 2&3&4 is equal to each value corresponding to FR1 and FR2. For UE supporting power class 1, N1 = 8 for all DRX cycle length. | | | | | | | |

It needs to be noted that any element in Table 3 may be used alone or in combination with other elements.

$T_{detect}$ in Table 3 refers to a detection cycle for a neighbor cell; $T_{measure}$ refers to a measurement cycle for a neighbor cell; $T_{evaluate}$ refers to an evaluation cycle for a neighbor cell.

M1 to M8 in the table are relaxation coefficients, and they are all less than $\lceil PTW/DRX\_cycle\_length \rceil$. When the cycle of the relaxed RRM measurement is determined according to Table 3, it is obvious that the UE has different eDRX cycles and DRX cycles, and the corresponding relaxation coefficients are also different.

In an embodiment, as shown in FIG. 5, the method further includes the step S100.

At 5100, it is determined whether the RRM measurement is allowed to be relaxed when the UE has the eDRX cycle.

The step S110 may include the step S111. At S111, in response to determining that the RRM measurement is allowed to be relaxed when the UE has the eDRX cycle and the eDRX cycle of the UE has the PTW, the relaxed RRM measurement configuration is determined according to the situation where the RRM measurement relaxation is limited to the PTW.

In some cases, when the UE is in a non-connected state and switches between a sleep state and a wake state according to the eDRX cycle, even when the relaxation condition of the RRM measurement is fulfilled and the RRM measurement is not allowed to be relaxed, then the RRM measurement may continue to be performed according to an original measurement configuration of the RRM measurement. When the relaxation condition of the RRM measurement is fulfilled and the RRM measurement is allowed to be relaxed, then a measurement configuration of the relaxed RRM measurement needs to be determined, and the RRM measurement is performed according to the relaxed RRM measurement configuration.

Whether the UE is allowed to relax the RRM measurement may be indicated by a network side, or may be decided by the UE itself.

For example, the network side device (for example, base station and/or core network device) or the UE itself may determine whether the UE is allowed to relax the RRM measurement according to a type of the UE, a service type of the UE, and/or a priority of the UE. When most service types of the UE are high-priority service types, or the type of the UE indicates that the UE is a UE with high mobility, relaxing the RRM measurement may cause a delay when the UE camping on the cell and/or a delay when obtaining the corresponding service to be long or cause the quality to be low. This long delay or low quality may cause poor user experience for the UE. In this case, relaxing the RRM measurement may be prohibited. Otherwise, relaxing the RRM measurement may be allowed.

In the embodiment of the disclosure, S110 is performed to obtain the relaxed RRM measurement configuration only when it is determined that the UE is allowed to relax the RRM measurement.

In some embodiments, the S100 may include at least one of:

determining, according to an agreement, whether the RRM measurement is allowed to be relaxed when the UE has the eDRX cycle; or

determining, according to a received configuration signaling, whether the RRM measurement is allowed to be relaxed when the UE has the eDRX cycle; or

For example, the agreement specifies whether the UE is allowed to relax the RRM measurement when the UE has the eDRX cycle, or the agreement specifies whether the UE is allowed to relax the RRM measurement when the UE has the eDRX cycle according to a type of the UE or a service type involved in the UE. If it is specified by the agreement, both the UE and the network device can know whether the RRM measurement is allowed to be relaxed at a current time by querying the agreement.

In some cases, the network device (e.g., base station and/or core network device) may send a configuration signaling that indicates whether the UE is allowed to send the RRM measurement.

The configuration signaling may be an RRC signaling, a MAC layer signaling or downlink control information (DCI).

For example, when the configuration signaling is the RRC signaling, the configuration signaling may correspond to one or more bits sent together with a measurement configuration signaling before relaxing the RRM measurement.

When the configuration signaling is a physical layer DCI, it is highly dynamic. The network side may dynamically indicate with a low delay whether the UE is allowed to relax the RRM measurement according to a current network condition and/or a UE condition.

The eDRX mechanism for idle UEs and the eDRX mechanism for inactive UEs have been introduced, but there are no relevant provisions for the RRM measurement relaxation of UE under the eDRX mechanism.

For a UE with an eDRX, a new method is introduced for relaxation of an RRM measurement in intra-frequency/inter-frequency/inter-RAT neighbor cells.

When the UE is configured with an eDRX cycle and a corresponding PTW, in response to fulfilling an RRM measurement relaxation condition, the relaxation may be performed by enlarging a cycle with the following parameters:

$T_{detect}$: a detection cycle;
$T_{measure}$: a measurement cycle;
$T_{evaluate}$: an evaluation cycle.

At least one of $T_{detect}$, $T_{measure}$, or $T_{evaluate}$ may be enlarged, and the lengths corresponding to the enlarged $T_{detect}$, $T_{measure}$, $T_{evaluate}$ may only be distributed within one PTW.

In an embodiment, at least one of $T_{detect}$, $T_{measure}$, or $T_{evaluate}$ may be enlarged, and the enlarged $T_{detect}$, $T_{measure}$, $T_{evaluate}$ may span across the PTWs, that is, the lengths corresponding to the enlarged $T_{detect}$, $T_{measure}$, $T_{evaluate}$ may be distributed in different PTWs.

In an embodiment,
the enlarged $T_{detect}$ still spans across the PTWs: when $T_{detect}$ is enlarged, $T_{detect}$ before enlarging may be multiplied by K1,

$$eDRX\_cycle\_length \times \lceil 23 \times K1/\lceil PTW/DRX\_cycle\_length\rceil\rceil,$$

or

$$K1 \times eDRX\_cycle\_length \times \lceil 23/\lceil PTW/DRX\_cycle\_length\rceil\rceil;$$

the enlarged $T_{measure}$ spans across the PTWs: when $T_{measure}$ is enlarged, the $T_{measure}$ before enlarging may be multiplied by K2;

$$eDRX\_cycle\_length \times \lceil 1 \times K2 / \lceil PTW / DRX\_cycle\_length \rceil \rceil,$$

or

$$K2 \times eDRX\_cycle\_length \times \lceil 1 / \lceil PTW / DRX\_cycle\_length \rceil \rceil;$$

the enlarged $T_{evaluate}$ spans across the PTWs: when the $T_{evaluate}$ is enlarged, the $T_{evaluate}$ before enlarging may be multiplied by K3;

$$eDRX\_cycle\_length \times \lceil 2 \times K3 / \lceil PTW / DRX\_cycle\_length \rceil,$$

or

$$K3 \times eDRX\_cycle\_length \times \lceil 2 / \lceil PTW / DRX\_cycle\_length \rceil \rceil.$$

It needs to be noted that, the aforementioned K1, K2 and K3 may be the same or different, and they are all relaxation coefficients.

At least one of $T_{measure}$ or $T_{evaluate}$ may not span across the PTWs after enlarging with a multiple. That is, the value of the multiple is limited to not exceeding a number of DRXs configured within the PTW, as shown in Table 3 above. The relaxation coefficients M1, M2, M3, M4, M5, M6, M7, and M8 may all be less than $\lceil PTW / DRX\_cycle\_length \rceil$, which may be identical or different. PTW is a length of the PTW of the UE. $\lceil PTW / DRX\_cycle\_length \rceil$ is a length of the DRX cycle within the PTW

In an embodiment, only $T_{measure}$ is enlarged, and the $T_{measure}$ after enlarging with a multiple does not span across the PTWs. The relaxation coefficient (or enlarging coefficient) corresponding to an enlarging multiple may be specified in an agreement. That is, the values of M5, M6, M7 and M8 in Table 3 above are not less than 1.

In an embodiment, only the $T_{evaluate}$ is enlarged, and the $T_{evaluate}$ after enlarging with a multiple does not span across the PTWs (the agreement specifies the enlarging coefficient, and the enlarged cycle does not exceed the PTW), that is, the value of M1/M2/M3/M4 in the above table is not less than 1.

In an embodiment, $T_{measure}$ or $T_{evaluate}$ are enlarged with multiples, and the $T_{measure}$ or $T_{evaluate}$ after enlarging with the multiples does not span across the PTWs (the agreement specifies the enlarging coefficient, and the enlarged cycle does not exceed the PTW). That is, the values of the coefficients M1, M2, M3, M4, M5, M6, M7 and M8 in the above table are all greater than 1 and less than $\lceil PTW / DRX\_cycle\_length \rceil$. Any two of M1, M2, M3, M4, M5, M6, M7 and M8 may be identical or different.

When the PTW is used in the RRM measurement, whether measurement relaxation may be performed under eDRX configuration is determined based on a network configuration or an agreement that is made in advance.

In an embodiment: the network sets a switch that indicates whether relaxing the RRM measurement is allowed or not when there is an eDRX cycle.

A method for determining a measurement configuration relaxation of a serving cell is introduced for the UE with the eDRX cycle. For example, after $N_{serv}$ is enlarged with a multiple K4, it will be possible to span across the PTWs. At this time, the relaxed measurement cycle of the serving cell may be seen in the aforementioned Table 1.

$N_{serv}$ may not span across the PTWs after enlarging with a multiple, that is, the value of the multiple is limited to not exceed the number of DRXs configured within the PTW. In this case, the relaxed measurement cycle for the serving cell may be seen in Table 2.

The coefficients M9 to M12 are all less than $\lceil PTW / DRX\_cycle\_length \rceil$ and any two of M9 to M12 may be identical or not identical.

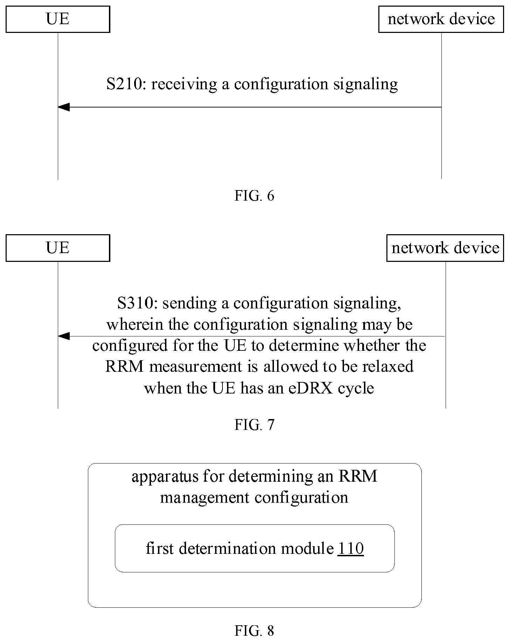

As shown in FIG. 6, an embodiment of the disclosure provides a method, which may include the following step 210.

At S210, a configuration signaling is received, in which the configuration signaling is configured for the UE to determine whether the RRM measurement is allowed to be relaxed when the UE has an eDRX cycle.

Correspondingly, as shown in FIG. 7, an embodiment of the disclosure provides a method, which may include the following step 310.

At S310, a configuration signaling is sent, in which the configuration signaling may be configured for the UE to determine whether the RRM measurement is allowed to be relaxed when the UE has an eDRX cycle.

The method is executed by a network device, which may be a base station or any other device located on the network side.

As shown in FIG. 8, an embodiment of the disclosure provides an apparatus for determining an RRM measurement configuration. The apparatus includes a first determination module.

The first determination module 110 is configured to in response to an eDRX cycle of the UE having a PTW, determine a relaxed RRM measurement configuration according to a situation where an RRM measurement relaxation is limited to the PTW.

In an embodiment, the first determination module 110 may be a program module. After the program module is executed by the processor, the program module determines the relaxed RRM measurement configuration according to the situation where the RRM measurement relaxation is limited to the PTW, when the UE has an eDRX cycle and there is a PTW within the eDRX cycle.

In another embodiment, the first determination module 110 may be a software-hardware combination module. The software-hardware combination module may include various programmable arrays. The programmable arrays include but are not limited to field programmable arrays and/or complex programmable arrays.

In some embodiments, the first determination module 110 includes, but is not limited to a pure hardware module. The pure hardware module includes, but is not limited to, an application specific integrated circuit.

In some embodiments, the RRM measurement configuration includes at least one of:

RRM measurement configuration for a serving cell, in which the RRM measurement configuration for the serving cell includes at least a measurement cycle, and the measurement cycle is configured for measurement of the serving cell; or

RRM measurement configuration for a neighbor cell, in which the RRM measurement configuration for the neighbor cell includes at least one of a detection cycle, a measurement cycle or an evaluation cycle.

The detection cycle is configured to identify and evaluate the neighbor cell.

The measurement cycle is configured to measure the neighbor cell.

The evaluation cycle is configured to evaluate the neighbor cell according to a measurement result measured in the measurement cycle.

In some embodiments, the first determination module is configured to enlarge with a relaxation coefficient, any cycle included in the RRM measurement configuration before relaxation according to the situation where the RRM measurement relaxation is limited to the PTW, to obtain a relaxed cycle. The relaxation coefficient is any positive integer greater than 1.

In some embodiments, the first determination module 110 is configured to perform at least one of:

in response to the RRM measurement relaxation not being limited to the PTW, determining a relaxed measurement cycle for a serving cell according to a relaxation coefficient, in which a number of DRX cycles included in the relaxed measurement cycle for the serving cell is allowed to be greater than a number of DRX cycles included in one PTW;

in response to the RRM measurement relaxation not being limited to the PTW, determining at least one of a relaxed detection cycle, a relaxed measurement cycle or a relaxed evaluation cycle for a neighbor cell according to a relaxation coefficient, in which a number of DRX cycles included in the relaxed detection cycle, the relaxed measurement cycle and the relaxed evaluation cycle is allowed to be greater than a number of DRX cycles included in one PTW;

in response to the RRM measurement relaxation being limited to the PTW, determining a relaxed measurement cycle for a serving cell according to a relaxation coefficient and a length of the PTW, in which a number of DRX cycles included in the relaxed measurement cycle for the serving cell is not greater than a number of DRX cycles included in one PTW;

in response to the RRM measurement relaxation being limited to the PTW, determining at least a relaxed measurement cycle and/or a relaxed evaluation cycle for a neighbor cell according to a relaxation coefficient and a length of the PTW, in which a number of DRX cycles included in the relaxed measurement cycle and the relaxed evaluation cycle is not greater than a number of DRX cycles included in one PTW; or

in response to the RRM measurement relaxation being limited to the PTW, determining a relaxed detection cycle for a neighbor cell according to a relaxation coefficient.

In some embodiments, the first determination module 110 is configured to perform at least one of:

in response to the RRM measurement relaxation not being limited to the PTW, determining the relaxed detection cycle for the neighbor cell according to a relaxation coefficient of a detection cycle for the neighbor cell;
in response to the RRM measurement relaxation not being limited to the PTW, determining the relaxed measurement cycle for the neighbor cell according to a relaxation coefficient of a measurement cycle for the neighbor cell; or
in response to the RRM measurement relaxation not being limited to the PTW, determining the relaxed evaluation cycle for the neighbor cell according to a relaxation coefficient of an evaluation cycle for the neighbor cell;
in which for the neighbor cell, any two among the relaxation coefficient of the detection cycle, the relaxation coefficient of the measurement cycle, and the relaxation coefficient of the evaluation cycle are independent of each other.

In some embodiments, the apparatus further includes: a second determination module, configured to determine whether the RRM measurement is allowed to be relaxed when the UE has the eDRX cycle;
in which the first determination module 110 is configured to in response to determining that the RRM measurement is allowed to be relaxed when the UE has the eDRX cycle and the eDRX cycle of the UE has the PTW, determine the relaxed RRM measurement configuration according to the situation where the RRM measurement relaxation is limited to the PTW.
In some embodiments, the second determination module is configured to perform at least one of:

determining, according to an agreement, whether the RRM measurement is allowed to be relaxed when the UE has the eDRX cycle; or
determining, according to a received configuration signaling, whether the RRM measurement is allowed to be relaxed when the UE has the eDRX cycle.

An embodiment of the disclosure provides a communication device, including: a memory storing instructions executable by a processor, and the processor connected to the memory. The processor is configured to execute a method for determining an RRM measurement configuration according to any of the foregoing technical solutions.
The processor may include various types of storage media, which are non-transitory computer storage media that may continue to memorize information stored on the communication device after the communication device is powered off.
Here, the communication device includes an access device, a UE or a core network device.
The processor may be connected to the memory through a bus or the like, and be used to read the executable program stored in the memory, for example, according to at least one of the methods illustrated in FIG. 3 to FIG. 7.

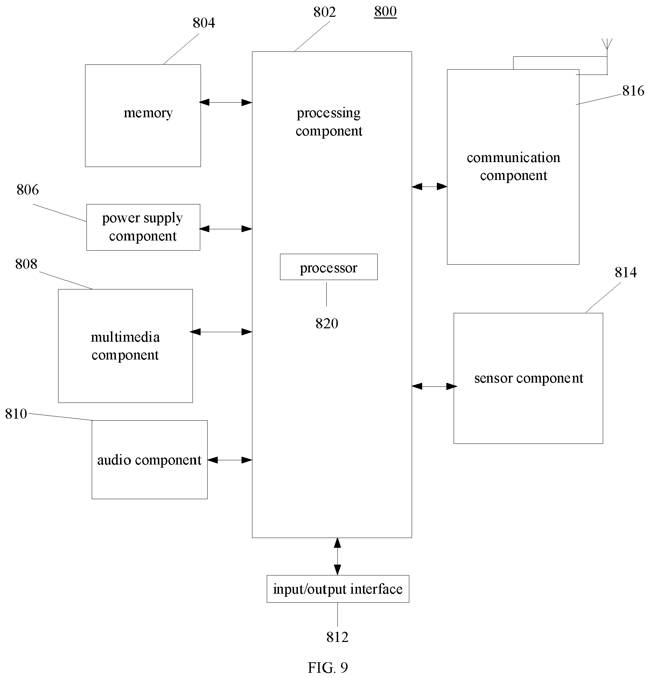

FIG. 9 is a block diagram of a UE 800 according to an exemplary embodiment of the disclosure. For example, the UE 800 may be a mobile phone, a computer, a digital broadcast user device, a messaging device, a gaming console, a tablet device, a medical device, a fitness device, a personal digital assistant, or the like.
Referring to FIG. 9, the UE 800 may include at least one of the following components: a processing component 802, a memory 804, a power supply component 806, a multimedia component 808, an audio component 810, an input/output (I/O) interface 812, a sensor component 814, and a communication component 816.
The processing component 802 generally controls overall operations of the UE 800, such as operations associated with display, phone calls, data communications, camera operations, and recording operations. The processing component 802 may include one or more processors 820 to execute instructions to complete all or part of the steps of the above methods. Additionally, the processing component 802 may include one or more modules that facilitates interactions between the processing component 802 and other components. For example, the processing component 802 may include a multimedia module to facilitate interactions between the multimedia component 808 and the processing component 802.
The memory 804 is configured to store various types of data to support operations at the UE 800. Examples of such data include instructions for any application or method operating on the UE 800, contact data, phonebook data, messages, pictures, videos, etc. The memory 804 may be implemented by any type of volatile or non-volatile storage device, or their combination, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.
The power supply component 806 provides powers to various components of the UE 800. The power supply components 806 may include a power management system, one or more power supplies, and other components associated with generating, managing, and distributing power to the UE 800.
The multimedia component 808 includes a screen that provides an output interface between the UE 800 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touches, slides, and gestures on the touch panel. The touch sensor may not only sense a boundary of the touch or sliding operation, but also detect a duration time and pressure related to the touch or sliding operation. In some embodiments, the multimedia component 808 includes a front-facing camera and/or a rear-facing camera. When the UE 800 is in an operating mode, such as a shooting mode or a video mode, the front camera and/or the rear camera may receive external multimedia data. Each of the front camera and rear camera may be a fixed optical lens system or have a focal length and optical zoom capabilities.

The audio component 810 is configured to output and/or input audio signals. For example, the audio component 810 includes a microphone (MIC) configured to receive external audio signals when the UE 800 is in operating modes, such as a call mode, a recording mode, and a voice recognition mode. The received audio signals may be further stored in the memory 804 or sent via the communication component 816. In some embodiments, the audio component 810 also includes a speaker for outputting audio signals.

The I/O interface 812 provides an interface between the processing component 802 and a peripheral interface module. The peripheral interface module may be a keyboard, a click wheel, a button, etc. These buttons may include, but are not limited to: a home button, volume buttons, a start button, and a lock button.

The sensor component 814 includes one or more sensors for providing various aspects of state assessment for the UE 800. For example, the sensor component 814 may detect an open/closed state of the UE 800 and a relative positioning of components, such as the display and keypad of the UE 800. The sensor component 814 may also detect changes in position of the UE 800 or components of the UE 800, a presence or absence of user contact with the UE 800, an orientation or acceleration/deceleration of the UE 800 and temperature changes of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communications between the UE 800 and other devices. The UE 800 may access a wireless network based on a communication standard, such as WiFi, 2G or 3G, or their combination. In an exemplary embodiment, the communication component 816 receives broadcast signals or broadcast related information from an external broadcast management system via a broadcast channel. In an exemplary embodiment, the communication component 816 also includes a near field communications (NFC) module to facilitate short-range communications. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the UE 800 may be implemented by one or more application specific integrated circuits (ASICs), digital signal processors (DSP), digital signal processing devices (DSPDs), programmable logic devices (PLDs), field programmable gate arrays (FPGAs), controllers, microcontrollers, microprocessors or other electronic components to execute the above-mentioned methods.

In an exemplary embodiment, a non-transitory computer-readable storage medium including instructions is also provided, such as the memory 804 including instructions, which may be executed by the processor 820 of the UE 800 to complete the above-mentioned methods. For example, the non-transitory computer-readable storage medium may be a ROM, a random access memory (RAM), a CD-ROM, a magnetic tape, a floppy disk, an optical data storage device, etc.

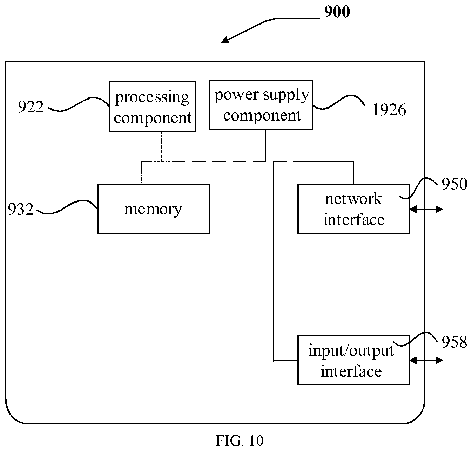

As illustrated in FIG. 10, it is a structural diagram of an access device according to an embodiment of the disclosure. The communication device 900 may be provided as a network side device. The communication device may be the above-mentioned access device and/or core network device.

Referring to FIG. 10, the communication device 900 includes a processing component 922, which further includes one or more processors, and a memory resource represented by a memory 932 for storing instructions, such as application programs, that may be executed by the processing component 922. The application program stored in the memory 932 may include one or more modules, each corresponding to a set of instructions. In addition, the processing component 922is configured to execute instructions to perform any of the above-mentioned methods applied to the access device, for example, the methods as illustrated in any of FIG. 3 to FIG. 7.

The communication device 900 may also include a power supply component 926 configured to perform power management of the communication device 900, a wired or wireless network interface 950 configured to connect the communication device 900 to the network, and an input/output (I/O) interface 958. The communication device 900 may operate based on an operating system stored in the memory 932, such as Windows Server™, Mac OS X™, Unix™, Linux™, FreeBSD™ or the like.

Other embodiments of the disclosure may be readily apparent to those skilled in the art from consideration of the specification and practice of the invention disclosed herein. The disclosure is intended to cover any variations, uses, or adaptations of the invention that follow the general principles of the invention and include common knowledge or conventional technical means in the technical field that are not disclosed in the invention. The specification and examples are only considered as exemplary, with a true scope and spirit of the disclosure being indicated by the following claims.

It should be understood that the disclosure is not limited to the precise structures described above and illustrated in the accompanying drawings, and various modifications and changes may be made without departing from the scope of the disclosure. The scope of the disclosure is limited only by the appended claims.

**Claims**

1. A method for determining a radio resource management (RRM) measurement configuration, performed by a user equipment (UE), the method comprising:

   in response to an extended discontinuous reception (eDRX) cycle of the UE having a paging time window (PTW), determining a relaxed RRM measurement configuration according to a situation where an RRM measurement relaxation is limited to the PTW.

2. The method according to claim 1, wherein the RRM measurement configuration comprises at least one of:

   RRM measurement configuration for a serving cell, wherein the RRM measurement configuration for the serving cell comprises at least a measurement cycle, and the measurement cycle is configured for measurement of the serving cell; or
   RRM measurement configuration for a neighbor cell, wherein the RRM measurement configuration for the neighbor cell comprises at least one of a detection cycle, a measurement cycle or an evaluation cycle; and
   wherein the detection cycle is configured to identify and evaluate the neighbor cell;
   the measurement cycle is configured to measure the neighbor cell; and
   the evaluation cycle is configured to evaluate the neighbor cell according to a measurement result measured in the measurement cycle.

3. The method according to claim 1, wherein determining the relaxed RRM measurement configuration according to the situation where the RRM measurement relaxation is limited to the PTW comprises:

   enlarging with a relaxation coefficient, any cycle comprised in the RRM measurement configuration before relaxation according to the situation where the RRM measurement relaxation is limited to the PTW, to obtain a relaxed cycle, wherein the relaxation coefficient is any positive integer greater than 1.

4. The method according to any one of claims 1 to 3, wherein determining the relaxed RRM measurement configuration according to the situation where the RRM measurement relaxation is limited to the PTW comprises at least one of:

   in response to the RRM measurement relaxation not being limited to the PTW, determining a relaxed measurement cycle for a serving cell according to a relaxation coefficient, wherein a number of DRX cycles comprised in the relaxed measurement cycle for the serving cell is allowed to be greater than a number of DRX cycles comprised in one PTW;
   in response to the RRM measurement relaxation not being limited to the PTW, determining at least one of a relaxed detection cycle, a relaxed measurement cycle or a relaxed evaluation cycle for a neighbor cell according to a relaxation coefficient, wherein a number of DRX cycles comprised in the relaxed detection cycle, the relaxed measurement cycle and the relaxed evaluation cycle is allowed to be greater than a number of DRX cycles comprised in one PTW;
   in response to the RRM measurement relaxation being limited to the PTW, determining a relaxed measurement cycle for a serving cell according to a relaxation coefficient and a length of the PTW, wherein a number of DRX cycles comprised in the relaxed measurement cycle for the serving cell is not greater than a number of DRX cycles comprised in one PTW;
   in response to the RRM measurement relaxation being limited to the PTW, determining at least a relaxed measurement cycle and/or a relaxed evaluation cycle for a neighbor cell according to a relaxation coefficient and a length of the PTW, wherein a number of DRX cycles comprised in the relaxed measurement cycle and the relaxed evaluation cycle is not greater than a number of DRX cycles comprised in one PTW; or
   in response to the RRM measurement relaxation being limited to the PTW, determining a relaxed detection cycle for a neighbor cell according to a relaxation coefficient.

5. The method according to claim 4, wherein in response to the RRM measurement relaxation not being limited to the PTW, determining at least one of the relaxed detection cycle, the relaxed measurement cycle or the relaxed evaluation cycle for the neighbor cell according to the relaxation coefficient comprises:

in response to the RRM measurement relaxation not being limited to the PTW, determining the relaxed detection cycle for the neighbor cell according to a relaxation coefficient of a detection cycle for the neighbor cell;
in response to the RRM measurement relaxation not being limited to the PTW, determining the relaxed measurement cycle for the neighbor cell according to a relaxation coefficient of a measurement cycle for the neighbor cell; or
in response to the RRM measurement relaxation not being limited to the PTW, determining the relaxed evaluation cycle for the neighbor cell according to a relaxation coefficient of an evaluation cycle for the neighbor cell;
wherein for the neighbor cell, any two among the relaxation coefficient of the detection cycle, the relaxation coefficient of the measurement cycle, and the relaxation coefficient of the evaluation cycle are independent of each other.

6. The method according to any one of claims 1 to 5, further comprising:

determining whether the RRM measurement is allowed to be relaxed when the UE has the eDRX cycle;
wherein in response to the eDRX cycle of the UE having the PTW, determining the relaxed RRM measurement configuration according to the situation where the RRM measurement relaxation is limited to the PTW comprises:
in response to determining that the RRM measurement is allowed to be relaxed when the UE has the eDRX cycle and the eDRX cycle of the UE has the PTW, determining the relaxed RRM measurement configuration according to the situation where the RRM measurement relaxation is limited to the PTW.

7. The method according to claim 6, wherein determining whether the RRM measurement is allowed to be relaxed when the UE has the eDRX cycle comprises at least one of:

determining, according to an agreement, whether the RRM measurement is allowed to be relaxed when the UE has the eDRX cycle; or
determining, according to a received configuration signaling, whether the RRM measurement is allowed to be relaxed when the UE has the eDRX cycle.

8. An apparatus for determining a radio resource management (RRM) measurement configuration, comprising:
a first determination module, configured to in response to an extended discontinuous reception (eDRX) cycle of the UE having a paging time window (PTW), determine a relaxed RRM measurement configuration according to a situation where an RRM measurement relaxation is limited to the PTW.

9. The apparatus according to claim 8, wherein the RRM measurement configuration comprises at least one of:

RRM measurement configuration for a serving cell, wherein the RRM measurement configuration for the serving cell comprises at least a measurement cycle, and the measurement cycle is configured for measurement of the serving cell; or
RRM measurement configuration for a neighbor cell, wherein the RRM measurement configuration for the neighbor cell comprises at least one of a detection cycle, a measurement cycle or an evaluation cycle; and
wherein the detection cycle is configured to identify and evaluate the neighbor cell;
the measurement cycle is configured to measure the neighbor cell; and
the evaluation cycle is configured to evaluate the neighbor cell according to a measurement result measured in the measurement cycle.

10. The apparatus according to claim 9, wherein the first determination module is configured to: enlarge with a relaxation coefficient, any cycle comprised in the RRM measurement configuration before relaxation according to the situation where the RRM measurement relaxation is limited to the PTW, to obtain a relaxed cycle, wherein the relaxation coefficient is any positive integer greater than 1.

11. The apparatus according to any one of claims 8 to 10, wherein the first determination module is configured to perform any one of:

in response to the RRM measurement relaxation not being limited to the PTW, determining a relaxed measurement cycle for a serving cell according to a relaxation coefficient, wherein a number of DRX cycles comprised in the relaxed measurement cycle for the serving cell is allowed to be greater than a number of DRX cycles comprised in one PTW;

in response to the RRM measurement relaxation not being limited to the PTW, determining at least one of a relaxed detection cycle, a relaxed measurement cycle or a relaxed evaluation cycle for a neighbor cell according to a relaxation coefficient, wherein a number of DRX cycles comprised in the relaxed detection cycle, the relaxed measurement cycle and the relaxed evaluation cycle is allowed to be greater than a number of DRX cycles comprised in one PTW;

in response to the RRM measurement relaxation being limited to the PTW, determining a relaxed measurement cycle for a serving cell according to a relaxation coefficient and a length of the PTW, wherein a number of DRX cycles comprised in the relaxed measurement cycle for the serving cell is not greater than a number of DRX cycles comprised in one PTW;

in response to the RRM measurement relaxation being limited to the PTW, determining at least a relaxed measurement cycle and/or a relaxed evaluation cycle for a neighbor cell according to a relaxation coefficient and a length of the PTW, wherein a number of DRX cycles comprised in the relaxed measurement cycle and the relaxed evaluation cycle is not greater than a number of DRX cycles comprised in one PTW; or

in response to the RRM measurement relaxation being limited to the PTW, determining a relaxed detection cycle for a neighbor cell according to a relaxation coefficient.

12. The apparatus according to claim 11, wherein the first determination module is configured to perform any one of:

in response to the RRM measurement relaxation not being limited to the PTW, determining the relaxed detection cycle for the neighbor cell according to a relaxation coefficient of a detection cycle for the neighbor cell;

in response to the RRM measurement relaxation not being limited to the PTW, determining the relaxed measurement cycle for the neighbor cell according to a relaxation coefficient of a measurement cycle for the neighbor cell; or

in response to the RRM measurement relaxation not being limited to the PTW, determining the relaxed evaluation cycle for the neighbor cell according to a relaxation coefficient of an evaluation cycle for the neighbor cell;

wherein for the neighbor cell, any two among the relaxation coefficient of the detection cycle, the relaxation coefficient of the measurement cycle, and the relaxation coefficient of the evaluation cycle are independent of each other.

13. The apparatus according to any one of claims 8 to 12, further comprising:

a second determination module, configured to determine whether the RRM measurement is allowed to be relaxed when the UE has the eDRX cycle; and

wherein the first determination module is configured to in response to determining that the RRM measurement is allowed to be relaxed when the UE has the eDRX cycle and the eDRX cycle of the UE has the PTW, determine the relaxed RRM measurement configuration according to the situation where the RRM measurement relaxation is limited to the PTW.

14. The apparatus according to claim 13, wherein the second determination module is configured to perform any one of:

determining, according to an agreement, whether the RRM measurement is allowed to be relaxed when the UE has the eDRX cycle; or

determining, according to a received configuration signaling, whether the RRM measurement is allowed to be relaxed when the UE has the eDRX cycle.

15. A communication device, comprising: a processor, a transceiver, and a memory storing executable programs that are able to be run by the processor, wherein when the executable programs are run by the processor, the method for determining a radio resource management (RRM) measurement configuration according to any one of claims 1 to 7 is implemented.

16. A computer-readable storage medium storing executable programs, wherein when the executable programs are executed by a processor, the method for determining a radio resource management (RRM) measurement configuration according to any one of claims 1 to 7 is implemented.

FIG. 1

eDRX cycle

PTW

DRX cycle

FIG. 2

```
   UE                          eNB                          MME

        SIB (eDRX allowed, Cell-
    ◄────specific DRX, SFN)

                                     attach or TAU (UE-specific DRX,
    ──────────────────────────────────────preferable eDRX)──────────►

             eDRX configuration
    ◄──────────────────────────────

                                      paging according to the eDRX
                                    ◄────────configuration──────────

              paging message
    ◄──────────────────────────────
```

FIG. 3

---

S110: in response to an extended discontinuous reception (eDRX) cycle of the UE having a paging time window (PTW), determining a relaxed RRM measurement configuration according to a situation where an RRM measurement relaxation is limited to the PTW

FIG. 4

---

S100: determining whether the RRM measurement is allowed to be relaxed when the UE has an eDRX cycle

S111: in response to determining that the RRM measurement is allowed to be relaxed when the UE has an eDRX cycle and the eDRX cycle of the UE has a PTW, determining the relaxed RRM measurement configuration according to the situation where the RRM measurement relaxation is limited to the PTW

FIG. 5

UE | network device

S210: receiving a configuration signaling

FIG. 6

UE | network device

S310: sending a configuration signaling, wherein the configuration signaling may be configured for the UE to determine whether the RRM measurement is allowed to be relaxed when the UE has an eDRX cycle

FIG. 7

apparatus for determining an RRM management configuration

first determination module 110

FIG. 8

804     802     800

memory

power supply
component

806

multimedia
component

808

audio component

810

processing
component

processor

820

input/output interface

812

communication
component

816

sensor component

814

FIG. 9

**900**

FIG. 10

## INTERNATIONAL SEARCH REPORT

| International application No. |
|---|
| **PCT/CN2021/105850** |

**A. CLASSIFICATION OF SUBJECT MATTER**

H04W 24/08(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 非连续接收, 扩大, 寻呼时间窗, 测量, 配置, 放松, 具有, 不具有, DRX, PTW, RRM, relaxation, factor, with, without

**C. DOCUMENTS CONSIDERED TO BE RELEVANT**

| Category* | Citation of document, with indication, where appropriate, of the relevant passages | Relevant to claim No. |
|---|---|---|
| A | CMCC. "Discussion on RRM impacts for reduced capability NR devices" *3GPP TSG-RAN WG4 Meeting # 99-e R4-2109485*, 11 May 2021 (2021-05-11), section 2 | 1-16 |
| A | CN 111278028 A (ZHANXUN SEMICONDUCTOR (NANJING) CO., LTD.) 12 June 2020 (2020-06-12) entire document | 1-16 |
| A | CN 113038524 A (VIVO COMMUNICATION TECHNOLOGY CO., LTD.) 25 June 2021 (2021-06-25) entire document | 1-16 |
| A | US 2020367168 A1 (LG ELECTRONICS INC.) 19 November 2020 (2020-11-19) entire document | 1-16 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 December 2021** | **27 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/105850**

| Patent document cited in search report | | | Publication date (day/month/year) | Patent family member(s) | | | Publication date (day/month/year) |
|---|---|---|---|---|---|---|---|
| CN | 111278028 | A | 12 June 2020 | None | | | |
| CN | 113038524 | A | 25 June 2021 | None | | | |
| US | 2020367168 | A1 | 19 November 2020 | WO | 2019147061 | A1 | 01 August 2019 |

Form PCT/ISA/210 (patent family annex) (January 2015)